(19) Europäisches Patentamt
European Patent Office
Office européen des brevets

(11) Veröffentlichungsnummer : **0 054 859**
**B1**

(12) # EUROPÄISCHE PATENTSCHRIFT

(45) Veröffentlichungstag der Patentschrift : **21.03.84**

(51) Int. Cl.³ : **C 07 C 87/68**, C 07 C 91/38, C 07 C143/60, C 07 C 85/02

(21) Anmeldenummer : **81110333.2**

(22) Anmeldetag : **11.12.81**

(54) **Naphthalin-Derivate, ihre Herstellung und ihre Verwendung.**

(30) Priorität : **23.12.80 DE 3048694**

(43) Veröffentlichungstag der Anmeldung : **30.06.82 Patentblatt 82/26**

(45) Bekanntmachung des Hinweises auf die Patenterteilung : **21.03.84 Patentblatt 84/12**

(84) Benannte Vertragsstaaten : **CH DE FR GB LI**

(56) Entgegenhaltungen :
**EP-A- 0 012 294**
**DE-A- 2 232 541**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Nickel, Horst, Dr.**
**Fontanestrasse 23**
**D-5090 Leverkusen 1 (DE)**
Erfinder : **Wild, Peter, Dr.**
**Hainstrasse 7**
**D-6305 Alten Buseck (DE)**

**EP 0 054 859 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Naphthalin-Derivate, ihre Herstellung und ihre Verwendung

Gegenstand der Erfindung sind Naphthalin-Derivate der allgemeinen Formel

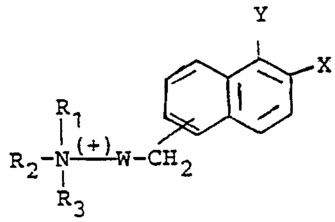 $n.A^{(-)}$ (I)

worin

X eine Amino- oder Hydroxygruppe,

Y Wasserstoff oder $SO_3^{(-)}$,

W eine direkte Bindung oder ein Brückenglied,

$R_1$, $R_2$ und $R_3$ unabhängig voneinander $C_1$- bis $C_4$-Alkyl, $C_3$- oder $C_4$-Alkenyl, Benzyl oder Phenylethyl, die durch Hydroxy, $C_1$- bis $C_4$-Alcoxy, Halogen oder Cyan und der Benzyl- und Phenylethylrest zusätzlich durch $C_1$- bis $C_4$-Alkyl substituiert sein können

$R_3$ zusätzlich Wasserstoff oder

$R_1$ und $R_2$ zusammen mit dem Stickstoffatom, an das sie gebunden sind, einen 5- oder 6-gliedrigen Ring, oder

$R_1$, $R_2$ und $R_3$ zusammen mit dem Stickstoffatom, an das sie gebunden sind, einen gegebenenfalls durch $C_1$-$C_4$-Alkyl substituierten Pyridinring und

$A^{(-)}$ ein Anion bedeuten,

n für 1 steht, wenn Y Wasserstoff bedeutet, und für 0 steht, wenn Y $SO_3^{(-)}$ bedeutet.

W steht bevorzugt für eine direkte Bindung oder ein Brückenglied

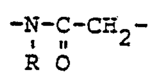 oder 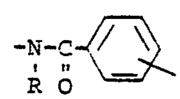

worin

R Wasserstoff oder $C_1$-$C_4$-Alkyl bedeutet,

$R_1$ und $R_2$ bilden zusammen mit dem Stickstoffatom beispielsweise einen gegebenenfalls durch $C_1$-$C_4$-Alkyl substituierten Piperidin-, Morpholin- oder Pyrrolin-Ring.

Als Anion $A^{(-)}$ kommen übliche farblose organische und anorganische Anionen beispielsweise Chlorid, Bromid, Jodid, Hydroxyl, Hydrogensulfat, Sulfat, Nitrat, Dihydrogenphosphat, Hydrogenphosphat, Phosphat, Carbonat, Methosulfat, Ethosulfat, Acetat, Propionat, Benzolsulfonat und Toluolsulfonat in Betracht.

Das Anion ist im allgemeinen durch das Herstellungsverfahren gegeben. Vorzugsweise liegen die Chloride, Hydrogensulfate, Sulfate, Methosulfate oder Acetate vor. Die Anionen können in bekannter Weise gegen andere Anionen ausgetauscht werden.

In den Verbindungen der Formel (I) stehen $R_1$, $R_2$ und $R_3$ bevorzugt für Methyl, Ethyl, Hydroxyethyl, Methoxyethyl, Ethoxyethyl, Chlorethyl, Cyanethyl, Benzyl oder Allyl. Sie bilden insbesondere zusammen nur dann die vorstehend genannten Ringe, wenn W ein Brückenglied darstellt.

Bevorzugt steht der Rest

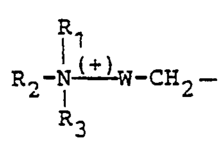

in der 5-Stellung.

Von den Naphthalin-Verbindungen der Formel (I) sind hervorzuheben die Verbindungen der Formel

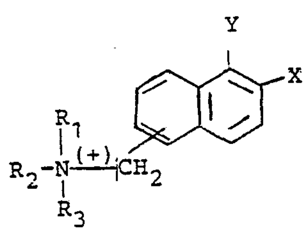 $n.A^{(-)}$ (II)

worin

$R_2$, $R_3$, X, Y, $A^{(-)}$ und n die obige Bedeutung haben.

Von besonderer Bedeutung sind die Verbindungen der Formeln

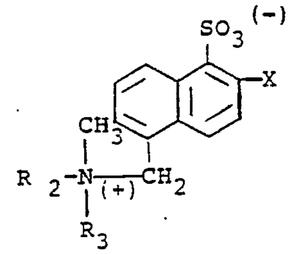

(III)

und

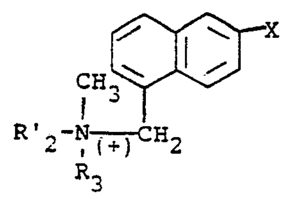

$A^{(-)}$

(IV)

worin

$R_2$, $R_3$, X und $A^{(-)}$ die obige Bedeutung haben, und

$R_2'$ für Methyl, Ethyl, Hydroxyethyl oder Benzyl steht.

Gegenstand der Anmeldung ist ferner die Herstellung der Naphthalin-Verbindungen (I). Sie erfolgt nach bekannten Verfahren in üblicher Art und Weise. Ausgangssubstanzen sind bei der Herstellung beispielsweise die Naphthalinsäuren

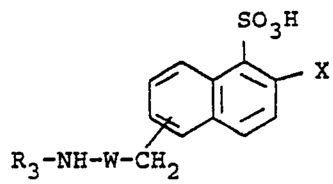

(V)

worin

$R_3$, W und X die oben angegebene Bedeutung haben.

N-Alkylierung und gegebenenfalls Sulfonsäure-Eliminierung (sauer) und/oder Umwandlung des X-Substituenten von Amino zu Hydroxy oder umgekehrt sind die Verfahren der Wahl, wobei die Reihenfolge der anzuwendenden Schritte variiert werden kann.

Die Umwandlung von X = Amino in eine Hydroxygruppe erfolgt beispielsweise durch Diazotieren der Aminogruppe und Verkochen (siehe z. B. Houben-Weyl, 4. Auflage, Thieme Verlag Stuttgart Band VI/1c, 1976, Seite 247 ff) oder durch Bucherer-Reaktion (dieselbe Literaturstelle, Seite 241 ff oder Houben-Weyl, Band XI/1, Seite 143 ff). Der Austausch von Hydroxy durch Amino erfolgt ebenfalls durch Bucherer-Reaktion.

Zur Herstellung von (I) ($Y = SO_3^{(-)}$) werden die Ausgangssubstanzen (V) N-alkyliiert. Die Ammonium-Verbindungen, die im allgemeinen als Betaine schwerlöslich sind, sind leicht zu isolieren.

Als N-Alkylierungsmittel kommen beispielsweise in Betracht : Halogenide wie Methylchlorid oder -Bromid, Ethylchlorid oder -Bromid, Allylchlorid oder Benzylchlorid, Arylsulfonsäureester wie Benzylsulfonsäure-methyl- oder -ethylester, Toluolsulfonsäure-methyl- oder -ethylester, Schwefelsäureester wie Dimethyl- oder Diethyl-sulfat, Ethylen- oder Propylenoxid.

Die Herstellung der Naphthalin-Verbindung (I) (Y = Wasserstoff) erfolgt in der Weise, daß Verbindungen (I) ($Y = SO_3^{(-)}$) mit starken Säuren wie Salzsäure, Schwefelsäure, Phosphorsäure in der Hitze behandelt werden.

Im Falle, daß in der Ausgangsverbindung (V) X eine Aminogruppe ist, kann die gegebenenfalls erwünschte Umwandlung in eine Hydroxygruppe durch Diazotierung und Verkochung vorgenommen werden. Diese Umwandlung kann auch an der quaternierten Verbindung (I) ($X = NH_2$) und nach Eliminierung der Sulfonsäuregruppe erfolgen.

Die Ausgangsverbindungen (V) sind u. a. aus der US-PS 4 126 609 bekannt. Beispielhaft seien genannt :

2-Amino-5-aminomethyl-naphthalinsulfonsäure,

2-Amino-5-methylaminomethyl-naphthalinsulfonsäure,
2-Amino-5-ethylaminomethyl-naphthalinsulfonsäure.

Die Naphthalin-Verbindungen (I) sind wertvolle Zwischenprodukte. Sie finden Verwendung zur Herstellung von Färbereihilfsmitteln und Farbstoffen. Vorzugsweise finden sie Verwendung zur Herstellung von Azofarbstoffen. Sie können als Kupplungskomponenten oder für den Fall, daß $X = NH_2$ ist, auch als Diazokomponenten eingesetzt werden.

Beispiel 1

252 g (1 Mol) 2-Amino-5-aminomethylen-naphthalinsulfonsäure werden als ca. 60 %ige feuchte Phase in 1,7 Liter Wasser mit 40 %iger wäßriger Natronlauge bei pH 12 bei Raumtemperatur gelöst. Unter kräftigem Rühren tropft man in etwa 1 Stunde 350 ml Dimethylsulfat zu, wobei der pH-Wert bei 11-12 gehalten wird.

Es werden gesamt etwa 350 ml 40 %ige wäßrige Natronlauge verbraucht ; die Temperatur steigt bis ca. 45°. Das Methylierungsprodukt fällt aus. Man rührt noch ca. 3 Stunden bei Raumtemperatur und saugt dann das ausgefallene Produkt bei Raumtemperatur ab.

Man erhält ca. 320 g feuchte Paste, die als solche weiter verwendet werden kann. Die erhaltene getrocknete farblose Verbindung Fp. > 300° entspricht nach NMR-spektroskopischer Untersuchung der Formel

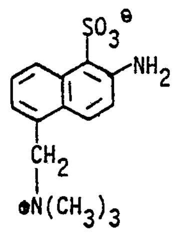

(1.1)

wobei die Protonen der Methylgruppen der Ammoniumgruppe bei 3 ppm die Protonen der Methylengruppe bei 4,6 ppm, die Kernprotonen im Bereich 7,5 bis 8,7 und die Protonen der 2-Aminogruppe bei 7,2 ppm erscheinen.

Die Ausbeute läßt sich durch Diazotieren der 2-Aminogruppe der Verbindung mit eingestellter Natriumnitritlösung bestimmen. Sie beträgt ca. 85 %.

Die Verbindung löst sich in verdünnter Salzsäure. Papierchromatographischer $R_f$-Wert 0,86 (Fließmittel wäßrige 1 %ige NaCl-Lösung).

Verwendet man anstelle obiger 5-Aminomethylen-2-aminonaphthalin-sulfonsäure als Ausgangsverbindung die 5-Methylamino-methylen-Verbindung, so erhält man nach analoger Umsetzung mit Dimethylsulfat die gleiche Verbindung (1.1) ; bei der Umsetzung mit Diethylsulfat erhält man die Methyldiethylammonium-Verbindung.

Verwendet man anstelle der 5-Aminomethylen-Ausgangsverbindung die 5-Ethyl-, oder 5-i-Propylaminomethylen-2-aminonaphthalinsulfonsäure, so erhält man nach Dimethylsulfat-Methylierung die Ethyl (bzw. i-Propyl)-dimethylammonium-methylen-Verbindung.

Durch Mischalkylierung mit Dimethylsulfat/Diethylsulfat lassen sich Mischalkylierungsprodukte verschiedener Zusammensetzung erhalten :

(1.1) — 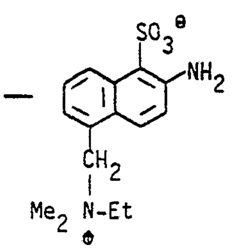 (1.2) — 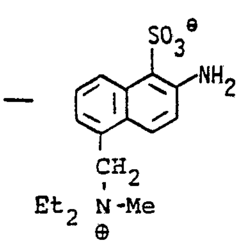 (1.3)

Methyliert man die 5-Amino-methylen-Ausgangsverbindung zunächst mit etwa 2 Mol Dimethylsulfat zur 5-Dimethylamino-methylensulfonsäure und setzt anschließend mit Ethylenoxid oder Propylenoxid um, so erhält man 5-Dimethyl-hydroxyethyl (bzw. -Hydroxypropyl) ammonium-methylen-2-aminonaphthalinsulfonat.

Verwendet man zur Methylierung der Aminomethylen-Ausgangsverbindung anstelle von Dimethylsulfat die äquimolare Menge an Benzolsulfonsäure-methylester so wird die gleiche Trimethylammonium-Verbindung (1.1) erhalten.

Beispiel 2

294 g (1 Mol) 2-Amino-5-trimethylammonium-methylen-naphthalinsulfonat — Verbindung (1.1) — werden als etwa 75 %ige Paste mit 350 ml 28 %iger wäßriger Salzsäure auf 100° erwärmt und 2 Stunden bei dieser Temperatur gehalten. Nach etwa 15 Minuten geht das Gemisch in Lösung. Man verfolgt den Fortgang der Reaktion chromatographisch (Kupplung der diazotierten Probe z. B. mit R-Salz). Nach beendeter Umsetzung kühlt man auf Raumtemperatur ab und verwendet die Lösung für weitere Reaktionen.

Die Bestimmung des Gehalts erfolgt durch Diazotieren mit eingestellter Natriumnitrit-Lösung und ergibt eine praktisch quantitative Ausbeute.

Die erhaltene Verbindung entspricht der Formel

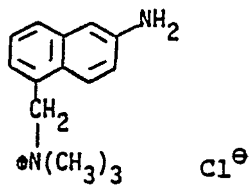

(2.1)

Papier-Chromatographischer $R_f$-Wert 0,89 (Fließmittel 1 %ige wäßrige NaCl-Lösung).

Um das 2-Aminonaphthalin-5-methylentrimethylammoniumchlorid aus der Lösung zu isolieren, fügt man 136 g Zinkchlorid zu und rührt eine Stunde. Das ausgefallene Zink-Doppelsalz wird abgesaugt und getrocknet. Fp. ca. 250°.

In analoger Weise wie obige Verbindung (1.1) werden die im Beispiel 1 angeführten Ammoniumsulfonsäure-Betaine 1.2 und 1.3 bei der Behandlung mit Salzsäure oder Schwefelsäure in der Wärme in die Ammoniumchloride bzw. Sulfate 2.2 bzw. 2.3 übergeführt.

Beispiel 3

294 g (1 Mol) 2-Amino-5-trimethylammonium-methylen-naphthalinsulfonat Verbindung 1.1 werden als ca. 75 %ige Paste mit 1 Liter Wasser und ca. 1 kg Eis verrührt und mit 345 ml 28 %iger wäßriger Salzsäure in Lösung gebracht. Man diazotiert nun durch Zutropfen von 230 ml 30 %iger wäßriger Natriumnitrit-Lösung in ca. 15 Minuten bei einer Temperatur von 0°. Nach weiteren 15 Minuten wird evtl. noch vorhandener Überschuß von salpetriger Säure mit etwas Amidosulfonsäure zerstört.

Diese Diazoniumsalz-Lösung läuft nun in eine bei 100° gehaltene Vorlage von 300 ml Wasser und 40 ml 28 %iger Salzsäure langsam in ca. 30 Minuten zu, so daß die Diazoniumgruppe immer unter Stickstoff-Abspaltung verschwindet — verkocht (d. h. daß keine alkalische Kupplungsreaktion beispielsweise mit R-Salz nachweisbar ist). Man rührt noch 15 Minuten bei 95-100° und isoliert dann das ausgefallene Produkt nach Abkühlen bei ca. 30° (Pastengewicht ca. 225 g). Die isolierte, getrocknete Verbindung hat einen Fp. > 300°. Die erhaltene Verbindung löst sich natronalkalisch. Sie entspricht nach NMR-spektroskopischer Analyse der Formel

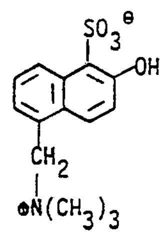

(3.1)

Die Protonen der Methylgruppen der Ammoniumgruppe erscheinen bei 3 ppm, die der Methylengruppe bei 4,7 ppm, die der Kernprotonen im 8 ppm-Bereich.

Verwendet man die in Beispiel 1 beschriebenen Aminoammoniumverbindungen 1.2 oder 1.3, so erhält man nach analoger Arbeitsweise wie oben, also Diazotierung und Verkochung, die entsprechenden 2-Hydroxynaphthalin-5-methylen-ammoniumsulfonate 3.2 und 3.3. Die Verkochung verläuft etwas schneller, wenn man eine geringe Menge Kupfer-2-sulfat als Katalysator zusetzt.

Beispiel 4

Die nach Beispiel 3 erhaltene Paste (ca. 225 g) des 2-Hydroxy-5-(trimethylammonium-methylen)-naphthalinsulfonat-Verbindung 3.1 wird mit 500 ml 28 %iger wäßriger Salzsäure verrührt, auf ca. 95°

erwärmt und eine halbe Stunde bei dieser Temperatur gehalten. Das Gemisch geht dann in Lösung und die Lösung enthält die Verbindung der Formel

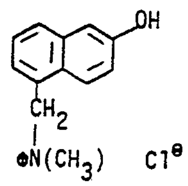

(4.1)

Papierchromatographischer $R_f$-Wert 0,60 in 1 %iger wäßriger NaCl-Lösung. Die Substanz läßt sich mit Diazoniumsalz-Verbindung sichtbar machen (Kuppeln) und bestimmen.

Um eine gut isolierbare Substanz zu erhalten, dampft man obige Reaktionslösung etwa zur Hälfte ein und versetzt mit einem Mol Zinkchlorid nach Abkühlen auf etwa 75°. Man rührt dann über Nacht bei Raumtemperatur und saugt das ausgefallene Zink-Doppelsalz obiger Ammoniumverbindung ab. Nach Trocknen im Vakuum erhält man ca. 195 g eines farblosen, in Wasser löslichen Pulvers-Schmelzpunkt 164°, papierchromatographischer $R_f$-Wert wie das Ammoniumchlorid.

Verwendet man die übrigen in Beispiel 3 beschriebenen 2-Hydroxysulfonaphthalin-5-methylen-ammoniun-Verbindungen, so erhält man nach saurer Sulfonsäuregruppen-Hydrolyse mit Salzsäure oder Schwefelsäure die entsprechenden 2-Hydroxy-naphthalin-5-methylenammoniumchloride bzw. -sulfate 4.2 bzw. 4.3.

**Ansprüche**

1. Naphthalin-Derivate der allgemeinen Formel

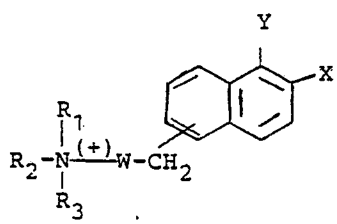

$n.A^{(-)}$

worin

X eine Amino- oder Hydroxygruppe,

Y Wasserstoff oder $SO_3^{(-)}$,

W eine direkte Bindung oder ein Brückenglied,

$R_1$, $R_2$ und $R_3$ unabhängig voneinander $C_1$- bis $C_4$-Alkyl, $C_3$- oder $C_4$-Alkenyl, Benzyl oder Phenylethyl, die durch Hydroxy, $C_1$- bis $C_4$-Alkoxy, Halogen oder Cyan und der Benzyl- und Phenylethylrest zusätzlich durch $C_1$- bis $C_4$-Alkyl substituiert sein können,

$R_3$ zusätzlich Wasserstoff oder

$R_1$ und $R_2$ zusammen mit dem Stickstoffatom, an das sie gebunden sind, einen 5- oder 6-gliedrigen Ring, oder

$R_1$, $R_2$ und $R_3$ zusammen mit dem Stickstoffatom, an das sie gebunden sind, einen gegebenenfalls durch $C_1$-$C_4$-Alkyl substituierten Pyridinring und

$A^{(-)}$ ein Anion bedeuten,

n für 1 steht, wenn Y Wasserstoff bedeutet, und für 0 steht, wenn Y $SO_3^{(-)}$ bedeutet.

2. Naphthalin-Derivate nach Anspruch 1, dadurch gekennzeichnet, daß W für eine direkte Bindung oder für ein Brückenglied der Formel

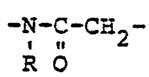 oder 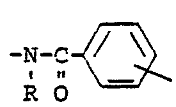

und R für Wasserstoff oder $C_1$-$C_4$-Alkyl stehen.

3. Naphthalin-Derivate nach Anspruch 1 der allgemeinen Formel

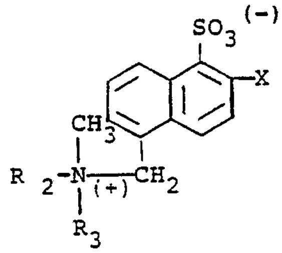

worin

$R_2$, $R_3$ und X die in Anspruch 1 angegebene Bedeutung haben.

4. Naphthalin-Derivate nach Anspruch 1 der allgemeinen Formel

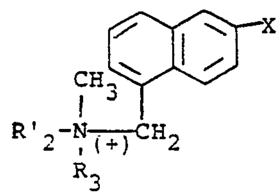

$A^{(-)}$

worin

$R_3$, X und $A^{(-)}$ die in Anspruch 1 angegebene Bedeutung haben, und

$R_2'$ für Methyl, Ethyl, Hydroxyethyl oder Benzyl steht.

5. Verfahren zur Herstellung von Naphthalin-Derivaten des Anspruchs 1, dadurch gekennzeichnet, daß man Naphthalinsulfonsäuren der allgemeinen Formel

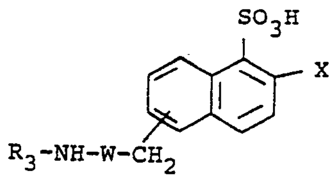

worin

$R_3$, W und X die in Anspruch 1 angegebene Bedeutung haben, alkyliert und die Sulfonsäuregruppe gegebenenfalls eliminiert.

6. Verwendung der Naphthalin-Derivate des Anspruchs 1 als Kupplungskomponente oder — falls X für eine Aminogruppe steht — auch als Diazokomponente zur Herstellung von Azofarbstoffen.

## Claims

1. Naphthalene derivatives of the general formula

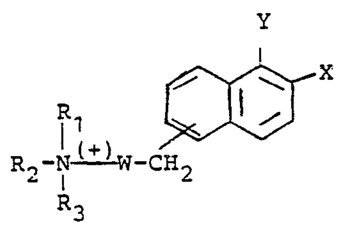

$n.A^{(-)}$

wherein

X denotes an amino or hydroxyl group,

Y denotes hydrogen or $SO_3^{(-)}$,

W denotes a direct bond or a bridge member,

$R_1$, $R_2$ and $R_3$ independently of one another denote $C_2$- to $C_4$-alkyl, $C_3$- or $C_4$-alkenyl or benzyl or phenylethyl, which can be substituted by hydroxyl, $C_1$- to $C_4$-alkoxy, halogen or cyano, and the benzyl radical and the phenylethyl radical can be substituted additionally by $C_1$- to $C_4$-alkyl,

$R_3$ additionally denotes hydrogen or

$R_1$ and $R_2$, together with the nitrogen atom to which they are linked, denote a 5-membered or 6-membered ring, or

$R_1$, $R_2$ and $R_3$, together with the nitrogen atom to which they are linked, denote a pyridine ring which is optionally substituted by $C_1$-$C_4$-alkyl, and

$A^{(-)}$ denotes an anion, and

n represents 1 if Y denotes hydrogen, and represents 0 if Y denotes $SO_3^{(-)}$.

2. Naphthalene derivatives according to Claim 1, characterised in that W represents a direct bond or a bridge member of the formula

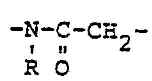

or

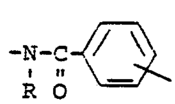

and R represents hydrogen or $C_1$-$C_4$-alkyl.

3. Naphthalene derivatives according to Claim 1, of the general formula

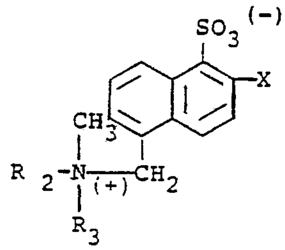

wherein

$R_2$, $R_3$ and X have the meaning indicated in Claim 1.

4. Naphthalene derivatives according to Claim 1, of the general formula

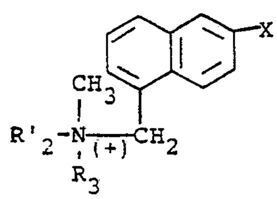

$A^{(-)}$

wherein

$R_3$, X and $A^{(-)}$ have the meaning indicated in Claim 1 and

$R_2'$ represents methyl, ethyl, hydroxyethyl or benzyl.

5. Process for the preparation of naphthalene derivatives of Claim 1, characterised in that naphthalenesulphonic acids of the general formula

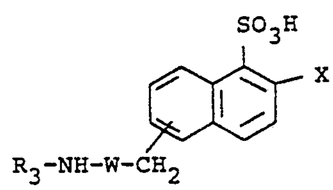

wherein

$R_3$, W and X have the meaning indicated in Claim 1, are alkylated and the sulphonic acid group is eliminated, if desired.

6. Use of the naphthalene derivatives of Claim 1 as coupling components or — if X represents an amino group — as diazo components, for the preparation of azo dyestuffs.

**Revendications**

1. Dérivés de naphtalène de formule générale

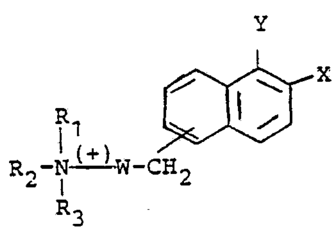

$n.A^{(-)}$

dans laquelle

X est un groupe amino ou hydroxy,

Y est l'hydrogène ou le groupe $SO_3^{(-)}$,

W est une liaison directe ou un pont,

$R_1$, $R_2$ et $R_3$ représentent, indépendamment l'un de l'autre, un groupe alkyle en $C_1$ à $C_4$, un groupe alcényle en $C_3$ ou $C_4$, un groupe benzyle, un groupe phényléthyle pouvant être substitué par un radical hydroxy, alkoxy en $C_1$ à $C_4$, halogéno ou cyano et le reste benzyle et phényléthyle, éventuellement par un radical alkyle en $C_1$ à $C_4$,

$R_3$ désigne en outre l'hydrogène ou bien

$R_1$ et $R_2$ représentent conjointement avec l'atome d'azote auquel ils sont liés un noyau pentagonal ou hexagonal, ou bien

$R_1$, $R_2$ et $R_3$ forment conjointement avec l'atome d'azote auquel ils sont liés un noyau de pyridine éventuellement substitué par un radical alkyle en $C_1$ à $C_4$ et

$A^{(-)}$ désigne un anion,

n est égal à 1 lorque Y représente l'hydrogène et à 0 lorsque Y représente le groupe $SO_3^{(-)}$.

2. Dérivés de naphtalène suivant la revendication 1, caractérisés en ce que W représente une liaison directe ou un pont de formule :

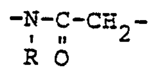 ou 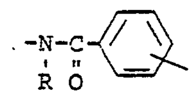

et R représente l'hydrogène ou un groupe alkyle en $C_1$ à $C_4$.

3. Dérivés de naphtalène suivant la revendication 1, de formule générale

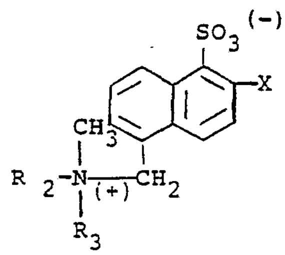

dans laquelle

$R_2$, $R_3$ et X ont la définition donnée dans la revendication 1.

4. Dérivés de naphtalène suivant la revendication 1, de formule générale

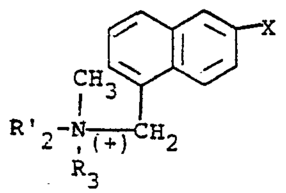

$A^{(-)}$

dans laquelle

$R_3$, X et $A^{(-)}$ ont les définitions indiquées dans la revendication 1, et

$R_2'$ est un groupe méthyle, éthyle, hydroxyéthyle ou benzyle.

5. Procédé de production de dérivés de naphtalène suivant la revendication 1, caractérisé en ce qu'on alkyle des acides naphtalène-sulfoniques de formule générale

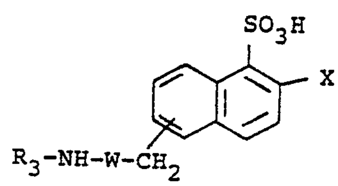

dans laquelle

$R_3$, W et X ont les définitions données dans la revendication et on élimine éventuellement le groupe acide sulfonique.

6. Utilisation des dérivés de naphtalène suivant la revendication 1 comme copulant ou — lorsque X représente un groupe amino — également comme composant diazotable pour la production de colorants azoïques.